# EUROPÄISCHE PATENTSCHRIFT

(11) **EP 3 405 357 B1**
(45) Veröffentlichungstag und Bekanntmachung des Hinweises auf die Patenterteilung: **28.08.2019**
(21) Anmeldenummer: 17716537.0
(22) Anmeldetag: 11.04.2017
(51) Int. Cl.: B60H 1/34, F24F 13/072, F24F 11/00, F24F 13/10, B64D 13/00

(54) **LUFTAUSSTRÖMER MIT EINER EINRICHTUNG ZUM STEUERN EINES LUFTSTROMS**
AIR VENT WITH AIR FLOW DIRECTION CONTROL MEMBER
AÉRATEUR D'AIR AVEC CONTRÔLE DE DIRECTION DU FLUX D'AIR

(30) Priorität: 19.04.2016 DE 102016107227
(43) Veröffentlichungstag der Anmeldung: 28.11.2018
(73) Patentinhaber: Dr. Schneider Kunststoffwerke GmbH, 96317 Kronach (DE)
(72) Erfinder: UHLENBUSCH, Olaf, 96275 Marktzeuln (DE); KAMAL, Matrane, 96450 Coburg (DE)
(86) Internationale Anmeldenummer: PCT/EP2017/058598
(87) Internationale Veröffentlichungsnummer: WO 2017/182318

(56) Entgegenhaltungen:
- EP-A2- 1 331 116
- DE-A1-102011 084 439
- DE-B3-102013 210 055
- FR-A1- 2 872 260
- FR-A1- 2 915 137

## Beschreibung

Es wird ein Luftausströmer mit einer Einrichtung zum Steuern eines Luftstroms beschrieben, wobei der Luftausströmer ein Gehäuse, das einen Luftkanal mindestens abschnittsweise umgibt, und ein verschwenkbar darin gelagertes Element aufweist, wobei das Gehäuse einen Lufteintrittsabschnitt, einen Mittelabschnitt und einen Luftaustrittsabschnitt aufweist und sich der Querschnitt des Luftkanals ausgehend vom Mittelabschnitt zu dem Luftaustrittsabschnitt hin verkleinert. Der Luftausströmer kann als Luftausströmer bei Fahrzeugen verwendet werden. Fahrzeuge umfassen nicht abschließend Kraftfahrzeuge, wie PKWs, LKWs, Busse und landwirtschaftliche Fahrzeuge, Züge, Flugzeuge und Schiffe. Insbesondere kann der Luftausströmer als Fugenausströmer in einem Armaturenbrett eines Kraftfahrzeugs verwendet werden. Fugenausströmer erstrecken sich über eine große Länge im Vergleich zu ihrer Höhe. In der Regel ist auch die Höhe derart gewählt, dass sie bspw. 20 mm nicht übersteigt.

Aus dem Stand der Technik sind verschiedene Luftausströmer mit einem verschwenkbar gelagerten Element bekannt.

Aus der DE 10 2007 019 602 B3 ist ein solcher Luftausströmer offenbart, wobei in einem Luftkanal ein im Wesentlichen kegelförmiges Luftleitelement angeordnet ist. Das Gehäuse des Luftausströmers für den Luftkanal und das kegelförmige Luftleitelement sind so ausgebildet, dass unter Ausnutzung des Coanda-Effekts eine Luftablenkung erzielt werden kann. Die in DE 10 2007 019 602 B3 offenbarte Ausgestaltung des Luftausströmers ermöglicht jedoch kein Ablenken eines Luftstroms über einen weiten Verstellbereich. Der Verstellbereich der Ablenkung definiert, inwieweit eine Luftablenkung nach oben bzw. nach unten, beispielsweise ausgehend von einem Fahrzeugarmaturenbrett, erfolgen kann. Die Anforderungen an die Luftablenkung sind dabei herstellerseitig sehr hoch. In der Regel sollte ausgehend von einem Luftstrom, welcher in einer Neutralstellung ausgegeben wird, eine Luftablenkung nach oben und unten um mindestens 45° erreicht werden.

Aus FR 2 872 260 A1 ist ein Luftausströmer offenbar, der einen Belüftungskanal mit einem Auslassabschnitt aufweist, der eine Austrittsöffnung definiert, wobei der Luftausströmer außerdem ein Luftführungselement besitzt, das in dem Auslassbereich angeordnet zwischen mindestens zwei Lüftungsstellungen bewegbar ist.

FR 2 915 137 A1 offenbart einen Luftausströmer mit einem verschwenkbar gelagerten Luftleitelement. Das Luftleitelement ist kegelförmig ausgebildet und ist über Haltearme mit einem Ring verbunden. Der Ring stützt sich an korrespondierend ausgebildeten Luftkanalwänden ab und ermöglicht ein Verschwenken des Luftleitelements in sämtlichen Richtungen. Zudem ist der Luftleitkörper über die Haltearme relativ zu dem Ring verschiebbar, wodurch die Menge an ausgegebener Luft regelbar ist. An dem vorderen Ende weist das Luftleitelement ein Betätigungselement auf, das aus dem Luftkanal herausragt und von einer Bedienperson ergriffen werden kann. Eine motorische Ansteuerung ist nicht möglich, weil das Luftleitelement in sämtlichen Raumrichtungen bewegbar ist. Daher ist das Betätigungselement wesentlicher Bestandteil.

DE 10 2013 210 055 B3 offenbart einen Luftausströmer mit einem starr ausgebildeten Luftleitelement. Das Luftleitelement ist in einem Luftkanal angeordnet und weist eine Hebelanordnung mit einem aus einer Luftaustrittsöffnung herausragenden Bedienelement auf. An dem Luftleitelement ist rückseitig ein Flügel angeordnet, der mit dem Bedienelement über die Hebelanordnung verbunden ist. Der Flügel ermöglicht die Luftverteilung in einen ersten Abschnitt und einen zweiten Abschnitt, wobei sich die Abschnitte zwischen dem Luftleitkörper und den gegenüberliegenden Kanalwänden erstrecken.

Es besteht daher die Aufgabe, einen Luftausströmer anzugeben, der ein verschwenkbar gelagertes Element aufweist und mit welchem eine Luftablenkung über einen weiten Verstellbereich hinaus möglich ist.

Die Aufgabe wird durch einen Luftausströmer mit den in Anspruch 1 angegebenen technischen Merkmalen gelöst. Vorteilhafte Weiterbildungen sind in den Unteransprüchen im Detail angegeben.

Ein Luftausströmer mit einer Einrichtung zum Steuern eines Luftstroms, der die vorstehend genannte Aufgabe löst, ergibt sich anhand der Merkmale des Patentanspruches 1.

Der Luftausströmer ist mit einer Einrichtung zum Steuern eines Luftstroms ausgebildet, wobei der Luftausströmer als Fugenausströmer ausgebildet ist und im Vergleich zu seiner Breite eine geringe Höhe aufweist. Er weist ein Gehäuse auf, das einen Luftkanal mindestens abschnittsweise umgibt, und einen verschwenkbar im Gehäuse gelagerten Verdrängungskörper besitzt. Das Gehäuse weist einen Lufteintrittsabschnitt, einen Mittelabschnitt und einen Luftaustrittsabschnitt auf und es verkleinert sich der Querschnitt des Luftkanals, ausgehend vom Mittelabschnitt zu dem Luftaustrittsabschnitt. Der Verdrängungskörper ist um eine Schwenkachse verschwenkbar, die parallel zu einer im Luftaustrittsabschnitt vorgesehenen Luftaustrittsöffnung verläuft, und weist mindestens abschnittsweise eine keulenartige Form im Querschnitt des Luftausströmers senkrecht zur Schwenkachse auf. Der Verdrängungskörper ist vollständig innerhalb des Luftkanals angeordnet und erstreckt sich über die Breite des Luftausströmers.

Der Verdrängungskörper ermöglicht neben dem direkten Ablenken von einströmender und ausströmender Luft eine Beschleunigung der austretenden Luft durch eine Verkleinerung des Luftkanalquerschnitts aufgrund der Veränderung des Abstands des Verdrängungskörpers zu den Kanalwänden des Luftkanals. Die mindestens abschnittsweise keulenartige Ausbildung des Verdrängungskörpers berücksichtigt die zu erzielende Ablenkung und die Ausbildung des Luftkanals. Der Luftausströmer wird so konzipiert, dass zum Ablenken eines austretenden Luftstroms in seinen maximalen Ablenkstellungen, d.h. nach oben oder nach unten, eine größere Beschleunigung des austretenden Luftstroms erfolgt. Eine solche Ausbildung ist in DE 10 2007 019 602 B3 nicht offenbart. Der darin beschriebene Luftausströmer ermöglicht es nur, Luft in einem geringen Verstellbereich abzulenken. Darüber hinaus ist der in DE 10 2007 019 602 B3 gezeigte Luftausströmer als Kugellüfter ausgebildet und das Luftleitelement über ein in festen Abständen umgebendes flächenförmiges Element verkipp- und verdrehbar gelagert.

Bei dem hierin beschriebenen Luftausströmer ist der Verdrängungskörper um nur eine Schwenkachse verschwenkbar gelagert und weist keine zusätzlichen Abstandselemente zur Lagerung und zur Ablenkung der Luft auf. Dadurch ergibt sich ein sehr einfacher Aufbau des Luftausströmers, der einen Verdrängungskörper aufweist, welcher in einem Luftkanal mit einem Lufteintrittsabschnitt, einem Mittelabschnitt und einem Luftaustrittsabschnitt angeordnet ist.

Der Verdrängungskörper kann mindestens einen ersten Abschnitt und einen zweiten Abschnitt aufweisen, wobei der erste Abschnitt keulenartig ausgebildet ist und der zweite Abschnitt eine gegenüber dem ersten Abschnitt geringere Dicke aufweist. In weiteren Ausführungsformen ist der zweite Abschnitt ein spitz zulaufender Abschnitt. Der spitz zulaufende Abschnitt kann sich mindestens über ein Drittel und in weiteren Ausführungsformen über die Hälfte des Verdrängungskörpers entlang dem Strömungsweg der den Luftkanal durchströmenden Luft erstrecken. Vorzugsweise ist der spitz zulaufende Abschnitt so ausgebildet, dass dieser einen sich im Wesentlichen parallel erstreckenden Abschnitt aufweist. Der sich parallel erstreckende Abschnitt ist der Bereich des zweiten Abschnitts des Verdrängungskörpers, der eine gleiche Dicke aufweist. Am Ende des zweiten Abschnitts, der dem keulenartigen Abschnitt gegenüberliegt, kann der zweite Abschnitt eine abgerundete oder spitz zulaufende Kante aufweisen. An dieser Kante oder dem abgerundeten Endabschnitt können in weiteren Ausführungsformen Dichtelemente angeordnet sein. Dichtelemente sind beispielsweise eine Gummi- oder Silikonlippe oder eine bestimmte Beschichtung mit abdichtenden Materialien, wie beispielsweise Silikon. Der keulenartige erste Abschnitt ist an dem den zweiten Abschnitt abgewandten Ende abgerundet ausgebildet. In weiteren Ausführungsformen ist der erste Abschnitt in diesem Bereich so ausgebildet, dass der Verdrängungskörper einen Querschnitt in Form eines Halbkreises aufweist. An diesem abgerundeten Bereich kann einströmende Luft oder ausströmende Luft ohne die Erzeugung von Turbulenzen entlangströmen.

Der Übergang zwischen dem ersten Abschnitt und dem zweiten Abschnitt des Verdrängungskörpers kann flach abfallend oder steil abfallend sein. Die Ausbildung der Übergänge ist abhängig von der Ausbildung des Verdrängungskörpers. Die Ausbildung der Abschnitte stellt dabei sicher, dass einströmende und ausströmende Luft nicht verwirbelt wird.

Die Schwenkachse des Verdrängungskörpers kann durch den ersten Abschnitt verlaufen. Da der Verdrängungskörper in der Regel im ersten Abschnitt ein höheres Gewicht aufweist als im zweiten Abschnitt, neigt der Verdrängungskörper dann nicht dazu, eigenständig durch das Gewicht des ersten Abschnitts zu kippen. Der erste Abschnitt des Verdrängungskörpers ist stets beabstandet zu mindestens zwei gegenüberliegenden Kanalwänden des Luftkanals im Bereich des Mittelabschnitts angeordnet. Wird der Verdrängungskörper um die Schwenkachse verschwenkt, so kann über den zweiten Abschnitt der Luftstrom entweder über oder unter dem Verdrängungskörper in Extremstellungen des Verdrängungskörpers abgestellt werden, wodurch es zu einer Beschleunigung des austretenden Luftstroms in der verbleibenden Passage zwischen einer Kanalwand und dem Verdrängungskörper kommt.

Der erste Abschnitt des Verdrängungskörpers kann dem Lufteintrittsabschnitt oder der Luftaustrittsöffnung zugewandt angeordnet sein. Ist der erste Abschnitt dem Lufteintrittsabschnitt zugewandt, ist in einer Vielzahl von Ausführungen der Übergang zwischen dem ersten Abschnitt und dem zweiten Abschnitt steil abfallend ausgebildet. Über den Lufteintrittsabschnitt einströmende Luft wird durch die gekrümmte Ausbildung des ersten Abschnitts umgelenkt und strömt dann der Krümmung des ersten Abschnitts folgend gegen die Kanalwand bzw. Kanalwände des Luftkanals. Ist der erste Abschnitt der Luftaustrittsöffnung zugewandt, ist in einer weiteren Vielzahl von Ausführungen der Übergang zwischen dem ersten Abschnitt und dem zweiten Abschnitt flach abfallend ausgebildet. Über den Lufteintrittsabschnitt einströmende Luft strömt an dem Verdrängungskörper entlang und wird kontinuierlich abgelenkt. Der Luftstrom folgt anschließend der Krümmung des keulenartigen ersten Abschnitts und gelangt von dort zu der Kanalwand bzw. zu den Kanalwänden, wodurch die Ablenkung der ausströmenden Luft durch die weitere Krümmung der Kanalwände erfolgt.

Der Verdrängungskörper kann entweder hohl oder massiv ausgebildet sein. Ein hohler Verdrängungskörper weist gegenüber einem massiv ausgebildeten Verdrängungskörper ein geringeres Gewicht auf. Um eine ausreichende Festigkeit und Widerstandskraft gegen Verformungen und zur Lagerung von Elementen zum Verschwenken des Verdrängungskörpers zu erreichen, kann in einem hohlen Verdrängungskörper eine Tragstruktur oder ähnliches vorgesehen sein. Ein hohler Verdrängungskörper kann einstückig ausgebildet sein. Hierbei kann eine Art Filmscharnier zur Montage von zwei Hälften des Verdrängungskörpers vorgesehen werden. Andererseits können auch zwei Halbschalen eines Verdrängungskörpers miteinander verclipst bzw. verschweißt werden.

Der Luftaustrittsabschnitt kann im Bereich der Luftaustrittsöffnung Übergange mit einer Kante aufweisen. Die Übergänge mit einer Kante stellen sicher, dass die über den Luftaustrittsabschnitt ausgegebenen Luftströme der Krümmung des Luftkanals durch die Querschnittsverkleinerung von dem Mittelabschnitt zu dem Luftaustrittsabschnitt folgen. Die Kanten können so ausgebildet sein, dass diese einen kleinen Radius aufweisen.

An die Luftaustrittsöffnung können sich gekrümmte Austrittsflächen anschließen. Die gekrümmten Austrittsflächen unterstützen die Luftablenkung nach unten und nach oben unter Ausnutzung des Coanda-Effekts. Die gekrümmten Austrittsflächen ermöglichen unter Ausnutzung des Coanda-Effekts ein Entlangströmen des austretenden Luftstroms aus der Luftaustrittsöffnung auch dann, wenn sich der Verdrängungskörper in einer solchen Mittelstellung befindet, dass ein möglichst geradliniger Luftstrom aus dem Luftausströmer ausgegeben wird, wobei die Austrittsgeschwindigkeit der Luft maßgebend dafür ist, ob eine solche Ablenkung durch die Austrittsflächen auftritt. D.h. bei geringen Luftgeschwindigkeiten ist eine breite Auffächerung des Luftstroms möglich.

Der Luftkanal kann im Bereich des Lufteintrittsabschnitts einen kleineren Durchmesser aufweisen als der Luftkanal im Bereich des Mittelabschnitts. Hierdurch kommt es zu einer geringen Reduzierung der Geschwindigkeit des eintretenden Luftstroms. Zudem wird ein Entlangströmen der einströmenden Luft entlang der Kanalwände, vor allem im Mittelabschnitt und im Luftaustrittsabschnitt, erreicht.

Der Verdrängungskörper kann ferner mit einem Elektromotor gekoppelt sein. Hierdurch ist es möglich, über Tastelemente oder anderweitige Steuereinrichtungen ein Verschwenken des Verdrängungskörpers zur Einstellung der ausströmenden Luft ohne mechanische Bedienelemente, wie beispielsweise ein Stellrad, welches in weiteren Ausführungsformen alternativ verwendet werden kann, vorzusehen. Der Luftausströmers ist als sogenannter Fugenausströmer ausgebildet. Fugenausströmer werden beispielsweise in einem Fahrzeugarmaturenbrett eingesetzt und erstrecken sich über eine bestimmte Breite, vorzugsweise über mindestens 300 mm. Ein Vorteil bei Fugenausströmern besteht darin, dass keine Lamellen von vorne einsehbar sind ("verdeckter" bzw. "unsichtbarer" Ausströmer) - auch solche nicht, die für die vertikale Luftablenkung im Hintergrund benötigt würden. Durch eine Segmentierung der von keulenartigen Verdrängungskörpern bzw. Verdrängungskörpern mit keulenartigen Abschnitten, können selbst gebogene bzw. dreidimensionale Fugen mit Luft bespielt werden.

Die Bestandteile des Luftausströmers, nämlich das Gehäuse sowie der Verdrängungskörper können aus einem Kunststoff hergestellt sein und dadurch ein geringes Gewicht aufweisen. Zudem ist es möglich, die Bestandteile in hoher Stückzahl schnell und kostengünstig herzustellen.

Der hierin beschriebene Luftausströmer weist einen sehr einfachen Aufbau auf und ermöglicht eine Luftablenkung über einen weiten Verstellbereich hinaus, ohne dass Lamellen oder anderweitige Luftleitelemente vorgesehen sein müssen.

Weitere Vorteile, Merkmale sowie Ausgestaltungsmöglichkeiten ergeben sich aus der nachfolgenden Figurenbeschreibung von nicht einschränkend zu verstehenden Ausführungsbeispielen.

In den Zeichnungen zeigt:
- Fig. 1: eine schematische Darstellung eines Luftausströmers mit einem Verdrängungskörper einer ersten Ausführungsform;
- Fig. 2: eine weitere schematische Darstellung des Luftausströmers von Fig. 1;
- Fig. 3: eine schematische Darstellung eines Luftausströmers mit einem Verdrängungskörper einer zweiten Ausführungsform;
- Fig. 4: eine weitere schematische Darstellung des Luftausströmers von Fig. 3; und
- Fig. 5: eine noch weitere schematische Darstellung des Luftausströmers von Fig. 3.

In den Figuren mit gleichen Bezugszeichen versehene Teile entsprechen im Wesentlichen einander, sofern nichts anderes angegeben ist. Darüber hinaus wird darauf verzichtet, Bestandteile zu beschreiben, welche nicht wesentlich zum Verständnis der hierin offenbarten technischen Lehre sind.

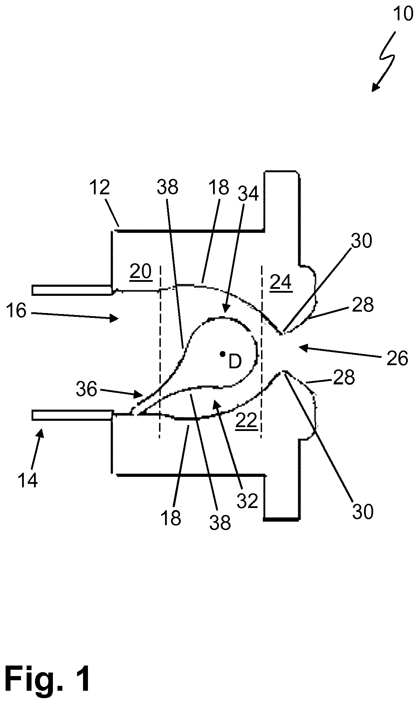

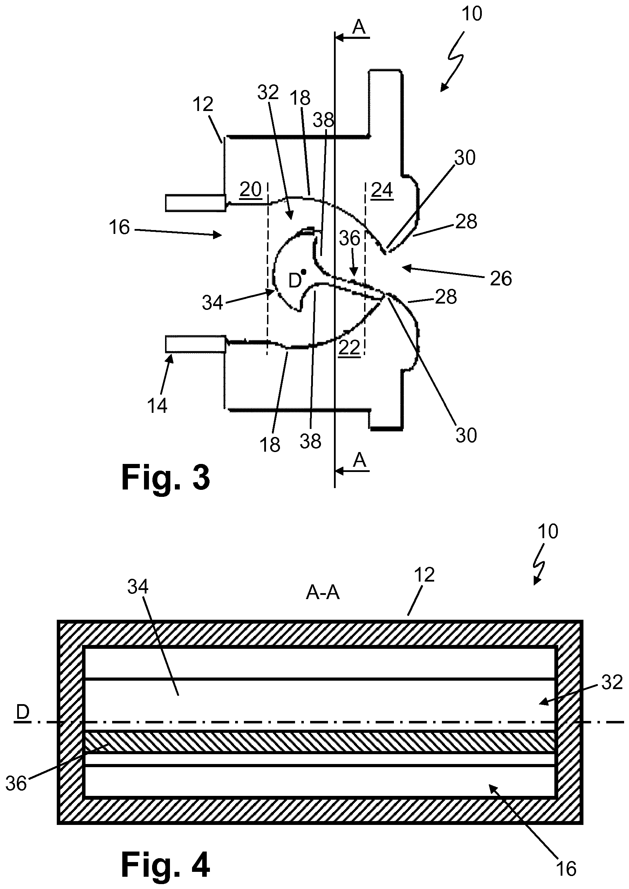

Fig. 1 zeigt eine schematische Darstellung eines Luftausströmers 10 mit einem Verdrängungskörper 32 in einer ersten Ausführungsform. Der Luftausströmer 10 ist als Fugenausströmer ausgebildet und in einem Fahrzeugarmaturenbrett angeordnet. Der Luftausströmer 10 weist neben dem Verdrängungskörper 32 ein Gehäuse 12 auf, das einen Luftkanal 16 umgibt. Der Luftkanal 16 im Gehäuse 12 ist im Wesentlichen in drei Abschnitte aufgeteilt. Der Luftkanals 16 weist einen Lufteintrittsabschnitt 20, einen Mittelabschnitt 22 und einen Luftaustrittsabschnitt 24 auf. Über den Lufteintrittsabschnitt 20 ist das Gehäuse 12 mit einem Versorgungskanal 14 verbunden. Über den Versorgungskanal 14 wird Frischluft oder klimatisierte Luft von einer Fahrzeugklimaanlage oder einer anderen Belüftungseinrichtung dem Luftausströmer 10 zugeführt. Es kann noch weiter eine Schließklappe vorgesehen sein, über welche die Menge der zugeführten Luft und damit auch die Menge der ausgegebenen Luft steuerbar ist. Eine solche Schließklappe kann auch bei der in den Fig. 3 bis 5 gezeigten zweiten Ausführungsform eines Luftausströmers 10 vorgesehen sein.

Im Bereich des Mittelabschnitts 22 ist der Verdrängungskörper 32 um eine Schwenkachse D verschwenkbar gelagert. Im Luftaustrittsabschnitt 24 weist der Luftausströmer 10 eine Luftaustrittsöffnung 26 auf. Die Höhe der Luftaustrittsöffnung 26 ist deutlich geringer als die Höhe des Luftkanals 16 im Bereich des Mittelabschnitts 22 und im Bereich des Lufteintrittsabschnitts 20.

Der Querschnitt des Luftkanals 16 vergrößert sich ausgehend vom Lufteintrittsabschnitt 20 zu dem Mittelabschnitt 22 um ein geringes Maß, so wie dies in Fig. 1 dargestellt ist. Dadurch strömt einströmende Luft entlang von Kanalwänden 18. Ausgehend vom Mittelabschnitt 22 verkleinert sich der Querschnitt des Luftkanals 16 bis in den Bereich des Luftaustrittsabschnitts 24, in welchem die Luftaustrittsöffnung 26 angeordnet ist. In den Übergängen 30 von den Kanalwänden 18 zu Austrittsflächen 28 sind die Übergänge 30 so ausgebildet, dass diese eine Kante bereitstellen. Die Übergänge 30 weisen jedoch keine scharfkantige Kante auf, sondern können einen abgerundeten Übergang aufweisen. Die Übergänge 30 weisen beispielswiese Radien < 5 mm auf.

Die Austrittsflächen 28 weisen eine Krümmung auf. Über die Krümmung 28 kann bei einer Neutralstellung (in Fig. 1 nicht dargestellt) des Verdrängungskörpers 32 beim Ausgeben eines im Wesentlichen geradlinigen Luftstroms (in Zeichnungsrichtung von Fig. 1 nach rechts) ein Entlangströmen der Luft an den Austrittsflächen 28 erreicht werden. Durch die gekrümmte Ausbildung der Austrittsflächen 28 erfolgt unter Ausnutzung des Coanda-Effekts ein Entlangströmen der Luft an diesen Austrittsflächen 28. Dadurch kann ein diffuser Luftstrom bereitgestellt werden, wobei der ausgegebene Luftstrom über die Luftaustrittsöffnung 26 einen weiten Bereich mit Luft versorgt.

Die Kanalwände 18 weisen ebenfalls eine Krümmung auf, die den Luftkanal 16 zu der Luftaustrittsöffnung 26 hin verkleinert. Dadurch erfolgt bei der Ausrichtung des Verdrängungskörpers 32, wie in Fig. 1 gezeigt, ein Entlangströmen der Luft entlang der oberen Kanalwand 18, wobei der austretende Luftstrom unter Ausnutzung des Coanda-Effekts der Ausrichtung folgt und damit ein Luftstrom nach unten (in Zeichnungsrichtung von Fig. 1) ausgegeben wird. Der Verdrängungskörper 32 weist einen ersten Abschnitt 34 und einen zweiten Abschnitt 36 auf. Der erste Abschnitt 34 ist im Wesentlichen keulenartig ausgebildet. Der zweite Abschnitt 36 ist im Wesentlichen flach ausgebildet und weist im Wesentlichen über seine gesamte Länge eine gleichbleibende Dicke auf. Die Übergänge 38 vom ersten Abschnitt 34 zum zweiten Abschnitt 36 sind flach abfallend ausgebildet. Die Ausbildung der Übergänge 38 resultiert unter anderem in der Ausrichtung des Verdrängungskörpers 32, wobei der zweite Abschnitt 36 dem Lufteintrittsabschnitt 20 zugewandt ist. Über den zweiten Abschnitt 36 kann eine Aufteilung des einströmenden Luftstroms in den Luftkanal 16 eingestellt werden.

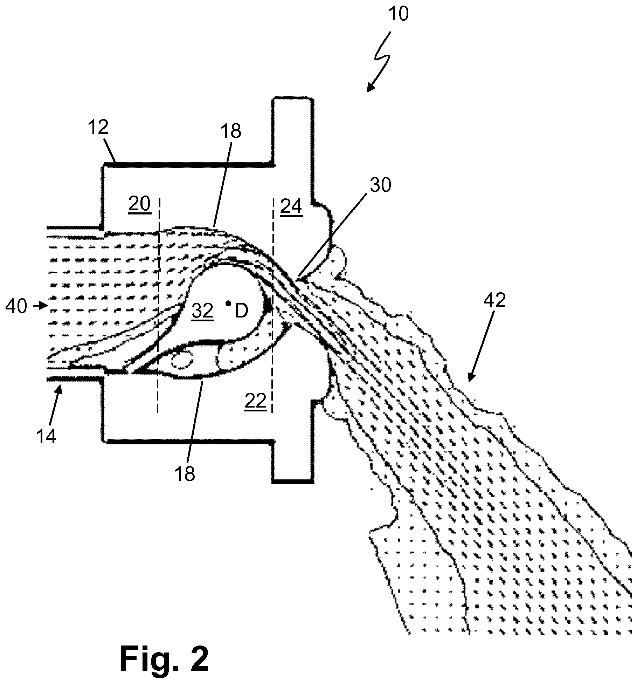

Bei einer in Fig. 1 nicht dargestellten mittigen Ausrichtung des Verdrängungskörpers 32 erfolgt eine gleichmäßige Aufteilung des eintretenden Luftstroms in Richtung zu der oberen Kanalwand 18 und zu der unteren Kanalwand 18. Dadurch wird ein im Wesentlichen geradliniger Luftstrom ausgegeben. Erfolgt ein Verschwenken des Verdrängungskörpers 32 um die Schwenkachse D, wie in Fig. 1 dargestellt, beispielsweise vollständig nach unten, so dass der zweite Abschnitt 36 an der unteren Kanalwand anliegt, so wird ein eintretender Luftstrom vollständig in dem Bereich zwischen dem ersten Abschnitt 34 und der oberen Kanalwand 18 geführt. Hierdurch kommt es zu einer Beschleunigung des Luftstroms, da der Querschnitt, welchen die Luft durchströmt, wesentlich reduziert ist. Der über die Luftaustrittsöffnung 26 ausgegebene Luftstrom folgt der Krümmung der oberen Kanalwand 18 und wird mit einer hohen Geschwindigkeit nach unten abgelenkt (siehe Fig. 2). Die gekrümmte Ausbildung der Austrittsflächen 28 unterstützt dabei die Ablenkung des Luftstroms nach unten unter Ausnutzung des Coanda-Effekts.

Der Verdrängungskörper 32 kann auch in Zwischenstellungen verbracht werden, wobei eine ungleichmäßige Verteilung des eintretenden Luftstroms in den oberen Bereich und den unteren Bereich durchgeführt werden kann. Strömt Luft beispielsweise sowohl in den oberen Bereich als auch in den unteren Bereich, wobei die zugeführte Luftmenge im oberen Bereich deutlich größer ist als im unteren Bereich, bewirkt der Luftstrom, der über den unteren Bereich in Richtung der Luftaustrittsöffnung 26 ausgegeben wird, eine geringfügige Ablenkung des ausgegebenen Luftstroms nach oben.

Der Luftausströmer 10 ist so ausgebildet, dass die Seitenwände des Luftausströmers 10, durch welche die Schwenkachse D verläuft, eine ebene Fläche bilden. Eine Krümmung herrscht in dem Luftkanal 16 daher nur in den sich gegenüberliegen Kanalwänden 18 vor. Der Verdrängungskörper 32 ist analog so ausgebildet, dass die Seitenflächen des Verdrängungsflächen 32, durch welche die Schwenkachse D verläuft, eine plane Fläche darstellen und an den ebenen Kanalwänden des Luftkanals 16 anliegen. Der Verdrängungskörper 32 erstreckt sich daher im Wesentlichen über die gesamte Breite des Luftkanals 16 in Zeichnungsrichtung hinein. Daher ist der Querschnitt des Luftausströmers 32 im Wesentlichen über seine gesamte Länge gleich, wie in Fig. 1 dargestellt.

Der Luftausströmer 10 eignet sich als sogenannter Fugenausströmer, welcher in der Regel eine Breite von mehr als 300 mm aufweist. Der Verdrängungskörper 32 ist über ein Bedienrad oder einen Elektromotor steuerbar. Hierzu weist der Verdrängungskörper 32 beispielsweise Lagerstifte auf, die in den gegenüberliegenden Ebenen der Kanalwände des Luftkanals 16 in entsprechenden Öffnungen aufgenommen sind. Zumindest einer der Lagerstifte ist dann über Zahnräder oder andere Antriebsmittel mit dem Elektromotor oder dem Bedienrad gekoppelt. Eine Ansteuerung des Elektromotors durch Bedienbefehle über Tasten oder andere Bedienelemente oder eine Ansteuerung durch Verdrehen eines Bedienrads bewirkt ein Verschwenken des Verdrängungskörpers 32. Der Verdrängungskörper 32 wird dadurch verschwenkt und ändert die Aufteilung des über den Lufteintrittsabschnitt 22 zugeführten Luftstroms zu dem oberen Abschnitt und dem unteren Abschnitt. Hierdurch kann auf einfache Art und Weise eine Ablenkung des ausgegebenen Luftstroms über einen weiten Bereich erreicht werden.

Darüber hinaus weist der Luftausströmer 10 nur wenige Komponenten auf. Die Komponenten, wie Verdrängungskörper 32, Lagerzapfen und Gehäuse 12 können beispielsweise aus einem Kunststoff bestehen und sind daher einfach und kostengünstig in hoher Stückzahl herstellbar.

Fig. 2 zeigt eine weitere schematische Darstellung des Luftausströmers 10 von Fig. 1. In Fig. 2 sind die Luftströme 40 und 42 dargestellt.

Wie der schematischen Darstellung von Fig. 2 entnommen werden kann, erfolgt durch die Stellung des Verdrängungskörpers 32, wie in Fig. 2 dargestellt, eine Beschleunigung des eintretenden Luftstroms 40 und eine Ablenkung nach unten, so dass der ausgegebene Luftstrom 42 mit einer hohen Geschwindigkeit im Wesentlichen nach unten ausströmt. Wie in Fig. 2 weiter dargestellt, erfolgt beispielsweise eine Ablenkung des Luftstroms um 45° nach unten. Analog dazu kann eine Ablenkung des Luftstroms 42 nach oben auch um 45° erfolgen. Weisen die Austrittsflächen 28 eine andere Krümmung auf oder sind entsprechend dünnwandig ausgebildet, können größere Luftablenkungen erreicht werden.

Fig. 3 zeigt eine schematische Darstellung eines Luftausströmers 10 mit einem Verdrängungskörper 32 in einer zweiten Ausführungsform. Die in Fig. 3 gezeigte zweite Ausführungsform unterscheidet sich von der in den Fig. 1 und 2 gezeigten Ausführungsform dadurch, dass der Verdrängungskörper 32 einen größeren zweiten Abschnitt 36, einen kleineren ersten Abschnitt 34 und eine andere Ausrichtung aufweist.

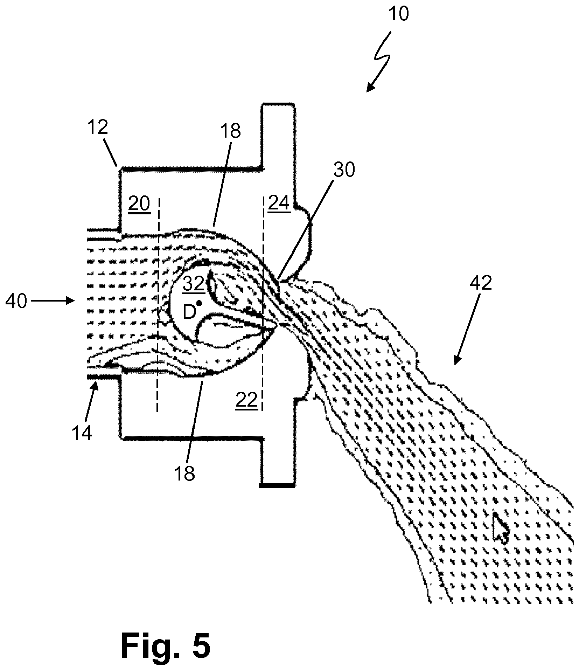

Der Luftausströmer 10 weist entsprechend dem Luftausströmer 10 der ersten Ausführungsform ein Gehäuse 12 mit einem Lufteintrittsabschnitt 20, einem Mittelabschnitt 22 und einem Luftaustrittsabschnitt 24 auf, wobei im Luftaustrittsabschnitt 24 eine Luftaustrittsöffnung 26 vorgesehen ist. Die Übergänge 30 bilden eine Kante, an der der ausgegebene Luftstrom 42 (siehe Fig. 5) entsprechend einer Krümmung von gegenüberliegenden und gekrümmten Kanalwänden 18 folgt. Ebenso weist der Luftausströmer 10 im Luftaustrittsabschnitt 24 gekrümmte Austrittsflächen 28 auf. Der Luftausströmer 10 ist im Lufteintrittsabschnitt 20 mit einem Versorgungskanal 14 verbunden, über welchen zugeführte Luft in den Luftkanal 16 einströmt.

Der Verdrängungskörper 32 ist um die Schwenkachse D verschwenkbar gelagert. Der Verdrängungskörper 32 kann analog zu der ersten beschriebenen Ausführungsform über ein Bedienrad oder einen Elektromotor verschwenkt werden. Der zweite Abschnitt 36 des Verdrängungskörpers 32 weist eine größere Länge auf als der in Fig. 1 und Fig. 2 gezeigte Verdrängungskörper 32 der ersten Ausführungsform. Darüber hinaus sind die Übergänge 38 zwischen dem ersten Abschnitt 34 und dem zweiten Abschnitt 36 stark abfallend ausgebildet. Der erste Abschnitt 34 weist einen im Wesentlichen halbkreisförmigen Querschnitt auf. Einströmende Luft strömt dadurch an dem ersten Abschnitt 34 entlang und gelangt auf Grund der Krümmung des ersten Abschnitts 34 und der Krümmung der Kanalwände 18 zu der Luftaustrittsöffnung 26. Über den zweiten Abschnitt 36 kann der Luftkanal 16 eine Absperrung des Luftkanals 16, beispielsweise wie in Fig. 3 gezeigt, im unteren Bereich erreichen. Durch die Ausbildung der Übergänge 38 kommt es nur zu einer geringen Verwirbelung des Luftstroms.

Bei der in Fig. 3 gezeigten Stellung des Verdrängungskörpers 32 wird die über den Lufteintrittsabschnitt 20 zugeführte Luft im Bereich des Mittelabschnitts 22 zwischen dem ersten Abschnitt 34 und der oberen Kanalwand 18 sehr stark beschleunigt und strömt der Kanalwand 18 entlang, so dass ein Luftstrom 42 ausgegeben wird, der nach unten gerichtet ist.

Würde der Verdrängungskörper 32 gegen den Uhrzeigersinn verschwenkt werden, gibt der zweite Abschnitt 36 einen Luftstrom zwischen dem ersten Abschnitt 34 des Verdrängungskörpers 32 und der unteren Kanalwand 18 frei, so dass in Abhängigkeit der Stellung des zweiten Abschnitts 36 eine Luftablenkung des ausgegebenen Luftstroms nach oben hin erreicht wird. Befindet sich der zweite Abschnitt 36 im Wesentlichen in einer Mittelstellung, wobei sich der zweite Abschnitt 36 in einer horizontalen Lage befindet, erfolgt im Wesentlichen keine Ablenkung eines ausgegebenen Luftstroms und der Luftstrom strömt in Zeichnungsrichtung von Fig. 3 im Wesentlichen geradlinig nach rechts aus der Luftaustrittsöffnung 26.

Sowohl der Verdrängungskörper 32 der ersten Ausführungsform als auch der Verdrängungskörper 32 der zweiten Ausführungsform bewirken zusätzlich zu der Luftablenkung auf Grund der Ausbildung der ersten Abschnitte 34 als keulenartige Abschnitte 34 eine Beschleunigung des ausgegebenen Luftstroms, da der Querschnitt des Luftkanals 16 deutlich verringert wird.

Fig. 4 zeigt eine weitere schematische Darstellung des Luftausströmers 10 von Fig. 3.

Fig. 4 zeigt einen Schnitt durch den Luftausströmer 10 von Fig. 3 entlang der Linie A-A. Der Verdrängungskörper 32 weist im Wesentlichen die gleiche Breite auf wie der Luftkanal 16. Eine Ablenkung der ausströmenden Luft erfolgt daher im Wesentlichen nur nach unten und nach oben. Ein Elektromotor oder ein Bedienrad sind an einer der Seitenwände des Gehäuses 12 mit wenigstens einem Lagerstift gekoppelt, über den der Verdrängungskörper 32 um die Schwenkachse D drehbar gelagert ist. Hierüber kann ein Verschwenken des Verdrängungskörpers 32 zur Änderung der Ausströmrichtung durchgeführt werden.

Fig. 5 zeigt eine noch weitere schematische Darstellung des Luftausströmers 10 von Fig. 3 der zweiten Ausführungsform. Analog zu der Darstellung des Luftausströmers 10 der ersten Ausführungsform in Fig. 2 erfolgt bei einem Verschwenken des Verdrängungskörpers 32 eine Absperrung eines Luftstroms zwischen dem Verdrängungskörper 32 und der unteren Kanalwand 18. Damit es zu keinem Luftaustritt und einer Beeinflussung des ausströmenden Luftstroms 42 kommt, kann an der Kante, über welche der zweite Abschnitt 36 des Verdrängungskörpers 32 an den Kanalwänden 18 anliegt, eine Dichtung angeordnet sein. Ebenso kann der Verdrängungsköper 32 der ersten Ausführungsform an dem zweiten Abschnitt 36 eine Dichtung aufweisen. Dichtungen können beispielsweise durch Gummilippen oder durch eine Silikonbeschichtung gebildet werden.

Wie in Fig. 5 dargestellt, kann eine Ablenkung eines eintretenden Luftstroms 40 durch den Verdrängungskörper 32 erreicht werden, wobei der austretende Luftstrom 42 um > 45° abgelenkt ist. Eine derartige Luftablenkung konnte bisher lediglich über Lamellen erreicht werden, die direkt im Bereich der Luftaustrittsöffnung angeordnet sind. Bei dem Luftausströmer 10 wird die große Ablenkung durch die Beschleunigung des austretenden Luftstroms 42 im Bereich des Mittelabschnitts 22 und des Luftaustrittsabschnitts 24 durch die Kanalverengung sowie über den Verdrängungskörper 32 erreicht. Die gekrümmte Ausbildung der Austrittsflächen 28 unterstützt dabei die Luftablenkung.

Ein Vorteil der Ausführung der Luftausströmer 10 (insbesondere der in den Fig.1 und Fig.2 dargestellten Ausführungsform) besteht darin, dass keine Lamellen von vorne einsehbar sind ("verdeckter" bzw. "unsichtbarer" Ausströmer) - auch solche nicht, die für die vertikale Luftablenkung im Hintergrund benötigt würden (Vertikal-Lamellen sind in den Figuren nicht dargestellt). Durch eine Segmentierung von keulenartigen Verdrängungskörpern können darüber hinaus selbst gebogene bzw. dreidimensionale Fugen mit Luft bespielt werden.

### Bezugszeichenliste

- 10: Luftausströmer
- 12: Gehäuse
- 14: Versorgungskanal
- 16: Luftkanal
- 18: Kanalwand
- 20: Lufteintrittsabschnitt
- 22: Mittelabschnitt
- 24: Luftaustrittsabschnitt
- 26: Luftaustrittsöffnung
- 28: Austrittsfläche
- 30: Übergang
- 32: Verdrängungskörper
- 34: Abschnitt
- 36: Abschnitt
- 38: Übergang
- 40: Luftstrom
- 42: Luftstrom
- D: Schwenkachse

## Patentansprüche

1. Luftausströmer mit einer Einrichtung zum Steuern eines Luftstroms, wobei der Luftausströmer (10) als Fugenausströmer ausgebildet ist und im Vergleich zu seiner Breite eine geringe Höhe aufweist, aufweisend ein Gehäuse (12), das einen Luftkanal (16) mindestens abschnittsweise umgibt, und einen verschwenkbar im Gehäuse (12) gelagerten Verdrängungskörper (32), wobei
- das Gehäuse (12) einen Lufteintrittsabschnitt (20), einen Mittelabschnitt (22) und einen Luftaustrittsabschnitt (24) aufweist und sich der Querschnitt des Luftkanals (16) ausgehend vom Mittelabschnitt (22) zu dem Luftaustrittsabschnitt (24) verkleinert,
- der Verdrängungskörper (32) um eine Schwenkachse (D) verschwenkbar ist, die parallel zu einer im Luftaustrittsabschnitt (24) vorgesehenen Luftaustrittsöffnung (26) verläuft, und mindestens abschnittsweise eine keulenartige Form im Querschnitt des Luftausströmers (10) senkrecht zu der Schwenkachse (D) aufweist,
- der Verdrängungskörper (32) vollständig innerhalb des Luftkanals (16) angeordnet ist, und
- der Verdrängungskörper (32) sich über die Breite des Luftausströmers (10) erstreckt.

2. Luftausströmer nach Anspruch 1, wobei der Verdrängungskörper (32) mindestens einen ersten Abschnitt (34) und einen zweiten Abschnitt (36) aufweist, wobei der erste Abschnitt (34) keulenartig ausgebildet ist und der zweite Abschnitt (36) eine gegenüber dem ersten Abschnitt (34) geringere Dicke aufweist.

3. Luftausströmer nach Anspruch 2, wobei der Übergang (38) zwischen dem ersten Abschnitt (34) und dem zweiten Abschnitt (36) des Verdrängungskörpers (32) flach abfallend oder steil abfallend ist.

4. Luftausströmer nach Anspruch 2 oder 3, wobei die Schwenkachse (D) durch den ersten Abschnitt (34) des Verdrängungskörpers (32) verläuft.

5. Luftausströmer nach einem der Ansprüche 2 bis 4, wobei der erste Abschnitt (34) des Verdrängungskörpers (32) dem Lufteintrittsabschnitt (20) oder der Luftaustrittsöffnung (26) zugewandt angeordnet ist.

6. Luftausströmer nach einem der Ansprüche 1 bis 5, wobei der Verdrängungskörper (32) hohl oder massiv ausgebildet ist.

7. Luftausströmer nach einem der Ansprüche 1 bis 6, wobei der Luftaustrittsabschnitt (24) im Bereich der Luftaustrittsöffnung (26) Übergänge (30) mit einer Kante aufweist.

8. Luftausströmer nach einem der Ansprüche 1 bis 7, wobei sich an die Luftaustrittsöffnung (26) gekrümmte Austrittsflächen (28) anschließen.

9. Luftausströmer nach einem der Ansprüche 1 bis 8, wobei der Luftkanal (16) im Bereich des Lufteintrittsabschnitts (20) einen kleineren Durchmesser aufweist als der Luftkanal (16) im Bereich des Mittelabschnitts (22).

10. Luftausströmer nach einem der Ansprüche 1 bis 9, wobei der Verdrängungskörper (32) mit einem Elektromotor gekoppelt ist.

## Claims

1. Air vent with a device for controlling an air flow, wherein the air vent (1) is formed as a gap vent and has a small height by comparison with its width, comprising a housing (12) surrounding an air channel (16) at least in a section and a displacement body (32) pivotably mounted in the housing (12), wherein
- the housing (12) has an air inlet section (20), a centre section (22) and an air outlet section (24) and the cross-section of the air channel (16) reduces going from the centre section (22) towards the air outlet section (24),
- the displacement body (32) is pivotable about a pivot axis (D), which extends parallel to an air outlet opening (26) provided in the air outlet section (24), and has a lobar form at least in a section in the cross-section of the air vent (10) perpendicular to the pivot axis (D),
- the displacement body (32) is arranged completely within the air channel (16) and
- the displacement body (32) extends over the width of the air vent (10).

2. Air vent according to claim 1, wherein the displacement body (32) has at least a first section (34) and a second section (36), wherein the first section (34) is of lobar form and the second section (36) has a thickness which is smaller by comparison with the first section (34).

3. Air vent according to claim 2, wherein the transition (38) between the first section (34) and the second section (36) of the displacement body (32) falls away flatly or steeply.

4. Air vent according to claim 2 or 3, wherein the pivot axis (D) extends through the first section (34) of the displacement body (32).

5. Air vent according to any one of claims 2 to 4, wherein the first section (34) of the displacement body (32) is arranged to face the air inlet section (20) or the air outlet opening (26).

6. Air vent according to any one of claims 1 to 5, wherein the displacement body (32) is of hollow or solid construction.

7. Air vent according to any one of claims 1 to 6, wherein the air outlet section (24) has, in the region of the air outlet opening (26), transitions (30) with an edge.

8. Air vent according to any one of claims 1 to 7, wherein curved outlet surfaces (28) adjoin the air outlet opening (26).

9. Air vent according to any one of claims 1 to 8, wherein the air channel (16) has a smaller diameter in the region of the air inlet section (20) than the air channel (16) in the region of the centre section (22).

10. Air vent according to any one of claims 1 to 9, wherein the displacement body (32) is coupled with an electric motor.

## Revendications

1. Diffuseur d'air avec un dispositif servant à commander un flux d'air, dans lequel le diffuseur d'air (10) est réalisé sous la forme d'un diffuseur de jonction et présente en comparaison avec sa largeur une hauteur inférieure, présentant un boîtier (12), qui entoure au moins par endroits un canal d'air (16), et un corps de refoulement (32) monté de manière à pouvoir pivoter dans le boîtier (12), dans lequel
- le boîtier (12) présente une section d'entrée d'air (20), une section centrale (22) et une section de sortie d'air (24) et la section transversale du canal d'air (16) se réduit en partant de la section centrale (22) vers la section de sortie d'air (24),
- le corps de refoulement (32) peut pivoter autour d'un axe de pivotement (D), qui s'étend de manière parallèle par rapport à une ouverture de sortie d'air (26) prévue dans la section de sortie d'air (24), et présente au moins par endroits une forme à la manière d'un lobe dans la section transversale du diffuseur d'air (10) de manière perpendiculaire par rapport à l'axe de pivotement (D),
- le corps de refoulement (32) est disposé en totalité à l'intérieur du canal d'air (16), et
- le corps de refoulement (32) s'étend sur la largeur du diffuseur d'air (10).

2. Diffuseur d'air selon la revendication 1, dans lequel le corps de refoulement (32) présente au moins une première section (34) et une deuxième section (36), dans lequel la première section (34) est réalisée à la manière d'un lobe et la deuxième section (36) présente une épaisseur plus petite par rapport à la première section (34).

3. Diffuseur d'air selon la revendication 2, dans lequel le passage (38) entre la première section (34) et la deuxième section (36) du corps de refoulement (32) tombe à plat ou tombe de manière abrupte.

4. Diffuseur d'air selon la revendication 2 ou 3, dans lequel l'axe de pivotement (D) s'étend à travers la première section (34) du corps de refoulement (32).

5. Diffuseur d'air selon l'une quelconque des revendications 2 à 4, dans lequel la première section (34) du corps de refoulement (32) est disposée de manière tournée vers la section d'entrée d'air (20) ou l'ouverture de sortie d'air (26).

6. Diffuseur d'air selon l'une quelconque des revendications 1 à 5, dans lequel le corps de refoulement (32) est réalisé de manière creuse ou de manière massive.

7. Diffuseur d'air selon l'une quelconque des revendications 1 à 6, dans lequel la section de sortie d'air (24) présente, dans la zone de l'ouverture de sortie d'air (26), des passages (30) avec une arête.

8. Diffuseur d'air selon l'une quelconque des revendications 1 à 7, dans lequel des surfaces de sortie (28) incurvées se raccordent à l'ouverture de sortie d'air (26).

9. Diffuseur d'air selon l'une quelconque des revendications 1 à 8, dans lequel le canal d'air (16) présente, dans la zone de la section d'entrée d'air (20), un diamètre plus petit que le canal d'air (16) dans la zone de la section centrale (22).

10. Diffuseur d'air selon l'une quelconque des revendications 1 à 9, dans lequel le corps de refoulement (32) est couplé à un moteur électrique.
